# FASCICULE DE BREVET EUROPEEN

(11) **EP 3 884 186 B1**
(45) Date de publication et mention de la délivrance du brevet: **07.09.2022**
(21) Numéro de dépôt: 19829291.4
(22) Date de dépôt: 20.11.2019
(51) Int. Cl.: F16K 7/10, B01D 29/00, B01D 29/11, E21B 43/00

(54) **REGISTRE AÉRAULIQUE ADOPTANT UN ÉTAT INTERMÉDIAIRE FILTRANT ENTRE DES ÉTATS PASSANT ET NON-PASSANT**
LUFTTECHNISCHES REGISTER MIT ANNAHME EINES ZWISCHENFILTERUNGSZUSTANDES ZWISCHEN PASS- UND NON-PASS-ZUSTÄNDEN
AERAULIC REGISTER ASSUMING AN INTERMEDIATE FILTERING STATE BETWEEN PASS AND NON-PASS STATES

(30) Priorité: 23.11.2018 FR 1871777
(43) Date de publication de la demande: 29.09.2021
(73) Titulaire: Commissariat à l'Énergie Atomique et aux Énergies Alternatives, 75015 Paris (FR); Guard Industrie, 75001 Paris (FR)
(72) Inventeur: DELLEA, Olivier, 38054 GRENOBLE CEDEX 09 (FR); CLAVAGUERA, Simon, 38054 GRENOBLE CEDEX 09 (FR); WAYSER, Barnabé, 75001 PARIS (FR)
(74) Mandataire: Brevalex
(86) Numéro de dépôt international: PCT/FR2019/052767
(87) Numéro de publication internationale: WO 2020/104756

(56) Documents cités:
- DE-A1- 2 801 605
- FR-A1- 2 764 672
- US-A- 4 398 565
- US-A- 5 441 651
- US-A1- 2002 046 840
- US-A1- 2004 003 927
- US-A1- 2013 220 644

## Description

### DOMAINE TECHNIQUE

La présente invention concerne un registre aéraulique, un tronçon de canalisation aéraulique équipé d'un tel registre, un système de traitement de gaz comprenant un tel tronçon de canalisation aéraulique, et un procédé d'ouverture d'un tronçon de canalisation aéraulique au moyen d'un tel registre aéraulique.

### ÉTAT DE LA TECHNIQUE ANTÉRIEURE

Les registres aérauliques connus de l'état de la technique pour ouvrir et fermer une canalisation aéraulique comprennent notamment les registres à palette, les registres à iris, et les registres à guillotine.

US 2004/003927 A1 divulgue un registre aéraulique comprenant un passage intérieur et un filtre qui s'étend tout autour du passage intérieur. Le filtre présente une surface radialement interne qui délimite extérieurement le passage intérieur, et une surface radialement externe destinée à être fixée sur une surface intérieure d'une paroi de canalisation. Le filtre comprend un milieu filtrant qui est élastiquement déformable radialement par rapport à l'axe et qui est agencé entre la surface radialement interne et la surface radialement externe.

Dans un registre à palette, un volet pivotant sur un axe passant par le centre du volet permet d'ouvrir ou de fermer une canalisation aéraulique. L'étanchéité sur les parois internes de la canalisation aéraulique est réalisée par un joint à lèvre. De ce fait, un tel registre présente toutefois une étanchéité imparfaite.

Un registre à iris fonctionne selon un principe similaire à un diaphragme d'appareil photographique. Des lamelles métalliques sont agencées circulairement bout-à-bout de sorte que l'ensemble de leurs bords respectifs forme sensiblement un polygone régulier. Ces lamelles glissent les unes contre les autres pour fermer ou ouvrir une canalisation aéraulique de forme sensiblement cylindrique. Par conception, un tel registre laisse une ouverture en son centre et ne peut donc obturer parfaitement la canalisation. De plus, un tel registre requiert des moyens relativement encombrants pour sa manœuvre.

Enfin, un registre à guillotine comporte une plaque montée coulissante dans un tiroir. Un tel registre peut être relativement étanche, mais se révèle particulièrement encombrant du fait que la plaque sort en excroissance par rapport à la canalisation aéraulique.

Par ailleurs, dans certaines applications, la canalisation aéraulique contient un air chargé en particules qui ne doivent pas être relâchées dans l'environnement, lors de l'ouverture du registre aéraulique.

Une solution à ce problème peut consister à disposer un filtre en aval du registre aéraulique, mais cela induit une perte de charge permanente, qui ne se justifie pas lorsque l'air circulant dans la canalisation est dépourvu de telles particules.

Un tel problème se rencontre par exemple dans les systèmes de traitement de gaz tels que les systèmes d'épuration de l'air intérieur de bâtiments, configurés pour fonctionner alternativement dans un mode de traitement en boucle ouverte et dans un mode de régénération en boucle fermée, comme cela apparaîtra plus clairement dans ce qui suit.

### EXPOSÉ DE L'INVENTION

L'invention a notamment pour but de proposer un registre aéraulique offrant une faible perte de charge à l'état passant et une bonne étanchéité à l'état non-passant, tout en évitant le passage de particules au travers du registre aéraulique lors de l'ouverture de ce dernier.

L'invention propose à cet effet un registre aéraulique, comprenant : un passage intérieur s'étendant selon un axe ; un filtre qui s'étend tout autour du passage intérieur, le filtre présentant une surface radialement interne qui délimite extérieurement le passage intérieur, et une surface radialement externe destinée à être fixée à une surface intérieure d'une paroi de canalisation, et le filtre comprenant un milieu filtrant qui est élastiquement déformable radialement par rapport à l'axe et qui est agencé entre la surface radialement interne et la surface radialement externe ; et un obturateur gonflable agencé sur la surface radialement interne du filtre et apte à adopter un état dégonflé, correspondant à un état passant du registre aéraulique, dans lequel une libre circulation de gaz est possible au travers du passage intérieur, un état gonflé à une première pression correspondant à un état filtrant du registre aéraulique, dans lequel l'obturateur gonflable obstrue le passage intérieur et dans lequel une circulation de gaz est possible au travers du filtre, et un état gonflé à une deuxième pression supérieure à la première pression, correspondant à un état non-passant du registre aéraulique, dans lequel l'obturateur gonflable obstrue le passage intérieur et comprime radialement le filtre au point d'empêcher tout passage de gaz au travers du filtre.

Le registre aéraulique selon l'invention permet une fermeture étanche d'une canalisation, lorsque l'obturateur gonflable est à l'état gonflé à la deuxième pression.

Il présente en outre l'avantage d'une faible perte de charge lorsque l'obturateur gonflable est à l'état dégonflé, du fait que le filtre ne forme pas obstacle au sein du passage intérieur.

Enfin, lors d'un passage du registre aéraulique de l'état non-passant à l'état passant, l'obturateur gonflable passe d'abord de l'état gonflé à la deuxième pression vers l'état gonflé à la première pression, dans lequel la circulation de gaz est contrainte à s'établir au travers du filtre exclusivement, avant d'atteindre l'état passant, qui autorise une libre circulation de gaz au travers du passage intérieur. Ainsi, le filtre récupère les particules éventuellement présentes dans la canalisation aéraulique lors de l'ouverture du registre aéraulique et évite que ces particules ne passent dans l'environnement.

Dans des modes de réalisation préférés de l'invention, le milieu filtrant est formé d'un textile 3D à double paroi.

Par ailleurs, le filtre présente avantageusement une géométrie de révolution autour de l'axe.

Dans des modes de réalisation préférés de l'invention, le filtre présente une section de passage qui varie le long de l'axe.

En variante, la section de passage peut être constante le long de l'axe.

Par ailleurs, le filtre comporte en outre avantageusement au moins une couche d'étanchéité, qui est réalisée en un matériau non perméable aux gaz et élastiquement déformable radialement par rapport à l'axe, et qui s'étend à une extrémité radiale du milieu filtrant de manière à définir au moins l'une parmi la surface radialement interne et la surface radialement externe.

Dans des modes de réalisation préférés de l'invention, le filtre comporte en outre deux électrodes configurées pour générer au sein du milieu filtrant un champ électrique radial, ou ayant une composante radiale. Les deux électrodes et le milieu filtrant forment ainsi ensemble un collecteur électrostatique.

L'invention concerne également un tronçon de canalisation aéraulique, comprenant une paroi de canalisation présentant une surface intérieure qui délimite un espace de circulation de gaz, et un registre aéraulique du type décrit ci-dessus fixé sur la surface intérieure de la paroi de canalisation.

Dans des modes de réalisation préférés de l'invention, ledit registre aéraulique est un premier registre aéraulique, et ledit tronçon de canalisation aéraulique comprend en outre un second registre aéraulique du type décrit ci-dessus fixé sur la surface intérieure de la paroi de canalisation et axialement adjacent audit premier registre aéraulique, le filtre du second registre aéraulique présentant un pouvoir filtrant supérieur à celui du filtre du premier registre aéraulique et une compressibilité radiale inférieure à celle du filtre du premier registre aéraulique, de sorte que les premier et second registres aérauliques définissent :
- un état passant du tronçon de canalisation aéraulique lorsque les premier et second registres aérauliques sont chacun à l'état passant,
- un état filtrant du tronçon de canalisation aéraulique lorsque les premier et second registres aérauliques sont chacun à l'état filtrant, et
- un état non-passant du tronçon de canalisation aéraulique lorsque le premier registre aéraulique est à l'état non-passant et que le second registre aéraulique est à l'état filtrant ou non-passant.

L'invention concerne également un système de traitement de gaz, apte à fonctionner de manière alternée dans un mode de traitement et dans un mode de régénération, comprenant :
- un canal principal présentant une entrée et une sortie ;
- un canal secondaire séparé du canal principal et présentant deux extrémités opposées raccordées au canal principal de sorte que le canal secondaire et une portion médiane du canal principal, agencée entre l'entrée et la sortie, forment une boucle fermée dans le mode de régénération ;
- un dispositif de captation disposé dans la portion médiane du canal principal, et adapté pour capter certaines substances éventuellement présentes dans un flux gazeux circulant dans le canal principal, dans le mode de traitement ;
- un dispositif de régénération disposé dans la boucle fermée et adapté pour libérer le dispositif de captation de substances qu'il a préalablement captées, dans le mode de régénération ; et
- un dispositif de commutation configuré pour maintenir l'entrée et la sortie ouvertes, isoler le canal secondaire du canal principal, et maintenir le dispositif de régénération à l'arrêt, dans le mode de traitement, et pour maintenir l'entrée et la sortie fermées, faire communiquer le canal secondaire avec la portion médiane du canal principal, et maintenir le dispositif de régénération en fonctionnement, dans le mode de régénération ; et
dans lequel le dispositif de commutation comporte au moins deux tronçons de canalisation aéraulique du type décrit ci-dessus, formant respectivement l'entrée et la sortie du canal principal.

L'invention concerne également un procédé d'ouverture d'un tronçon de canalisation aéraulique comprenant une paroi de canalisation présentant une surface intérieure qui délimite un espace de circulation de gaz, au moyen d'un registre aéraulique du type décrit ci-dessus, fixé sur la surface intérieure de la paroi de canalisation, le procédé consistant à faire passer l'obturateur gonflable du registre aéraulique de l'état gonflé à la deuxième pression à l'état gonflé à la première pression puis à l'état dégonflé.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique en section axiale d'un tronçon de canalisation comprenant un registre aéraulique selon un mode de réalisation préféré de l'invention, dans un état passant ;
- la figure 2 est une vue schématique en section transversale du tronçon de canalisation de la figure 1, dans le plan A-A de la figure 1 ;
- la figure 3 est une vue semblable à la figure 2, illustrant le registre aéraulique dans un état intermédiaire entre l'état passant et un état filtrant ;
- la figure 4 est une vue semblable à la figure 2, illustrant le registre aéraulique dans l'état filtrant ;
- la figure 5 est une vue semblable à la figure 1, illustrant le registre aéraulique dans l'état filtrant ;
- la figure 6 est une vue semblable à la figure 2, illustrant le registre aéraulique dans l'état filtrant, peu avant son passage dans un état non-passant ;
- la figure 7 est une vue semblable à la figure 2, illustrant le registre aéraulique dans l'état non-passant ;
- la figure 8 est une vue semblable à la figure 1, illustrant le registre aéraulique dans l'état non-passant ;
- les figures 9 et 10 sont des vues schématiques partielles, respectivement en perspective et en coupe, d'un tricot à double paroi destiné à former un filtre du registre aéraulique des figures 1 à 8 ;
- les figures 11 et 12 sont des vues respectivement semblables aux figures 5 et 8, illustrant une variante de réalisation du registre aéraulique ;
- les figures 13 et 14 sont des vues respectivement semblables aux figures 4 et 5, illustrant une autre variante de réalisation du registre aéraulique ;
- les figures 15 à 17 sont des vues semblables à la figure 1, illustrant respectivement d'autres variantes de réalisation du registre aéraulique ;
- la figure 18 est une vue semblable à la figure 1, illustrant un tronçon de canalisation aéraulique selon un autre mode de réalisation préféré de l'invention, comprenant deux registres aérauliques adjacents, le tronçon de canalisation aéraulique étant à l'état passant ;
- la figure 19 est une vue semblable à la figure 18, illustrant le tronçon de canalisation aéraulique à l'état filtrant ;
- la figure 20 est une vue semblable à la figure 18, illustrant le tronçon de canalisation aéraulique à l'état non-passant ;
- la figure 21 est un schéma de principe d'un système pour l'épuration de l'air intérieur de bâtiments, comprenant des tronçons de canalisation selon l'invention.

Dans l'ensemble de ces figures, des références identiques peuvent désigner des éléments identiques ou analogues.

### EXPOSÉ DÉTAILLÉ DE MODES DE RÉALISATION PRÉFÉRÉS

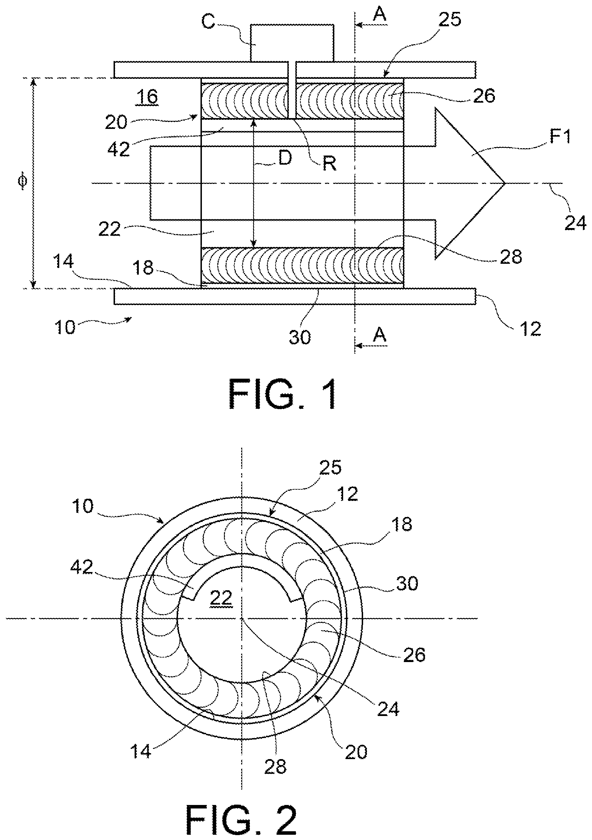

Les figures 1 à 8 illustrent un tronçon de canalisation aéraulique 10 comprenant une paroi de canalisation 12 présentant une surface intérieure 14 qui délimite un espace de circulation de gaz 16, et un registre aéraulique 20 fixé sur la surface intérieure 14 de la paroi de canalisation 12.

Pour les besoins de la présente description, le côté gauche sur les figures 1, 5 et 8 sera considéré comme un côté amont d'une canalisation aéraulique dont fait partie le tronçon 10, tandis que le côté droit sera considéré comme un côté aval. De plus, il sera considéré qu'un flux gazeux circule normalement du côté amont vers le côté aval.

La paroi de canalisation 12 est en forme de tube de section circulaire, ou peut être, en variante, de section ovale ou elliptique ou polygonale ou analogue. Cette paroi est par exemple réalisée en un matériau polymère ou en un matériau métallique.

La paroi de canalisation 12 présente typiquement un diamètre interne ø compris entre 5 et 150 centimètres.

Le registre aéraulique 20 comporte un passage intérieur 22 s'étendant selon un axe 24.

Le registre aéraulique 20 comporte en outre un filtre 25 qui s'étend tout autour du passage intérieur 22.

Le filtre 25 présente une surface radialement interne 28 qui délimite extérieurement le passage intérieur 22, et une surface radialement externe 30 fixée sur la surface intérieure 14 de la paroi de canalisation 12. De plus, le filtre 25 comporte un milieu filtrant 26 agencé entre la surface radialement interne 28 et la surface radialement externe 30. Le milieu filtrant 26 est conçu pour être élastiquement déformable radialement par rapport à l'axe 24, comme cela apparaîtra plus clairement dans ce qui suit.

Dans l'exemple illustré, le filtre 25 comporte une couche d'étanchéité 18 qui s'étend à une extrémité radiale externe du milieu filtrant de manière à définir la surface radialement externe 30, comme cela apparaîtra plus clairement dans ce qui suit. La couche d'étanchéité 18 est ainsi interposée entre la surface intérieure 14 du tronçon de canalisation 10 et le milieu filtrant 26.

Le filtre 25 présente préférentiellement une forme de révolution autour de l'axe 24, comme le montre la figure 2.

Le filtre 25 est de préférence constitué d'un textile à trois dimensions à double paroi, plus particulièrement un tricot 3D à double paroi.

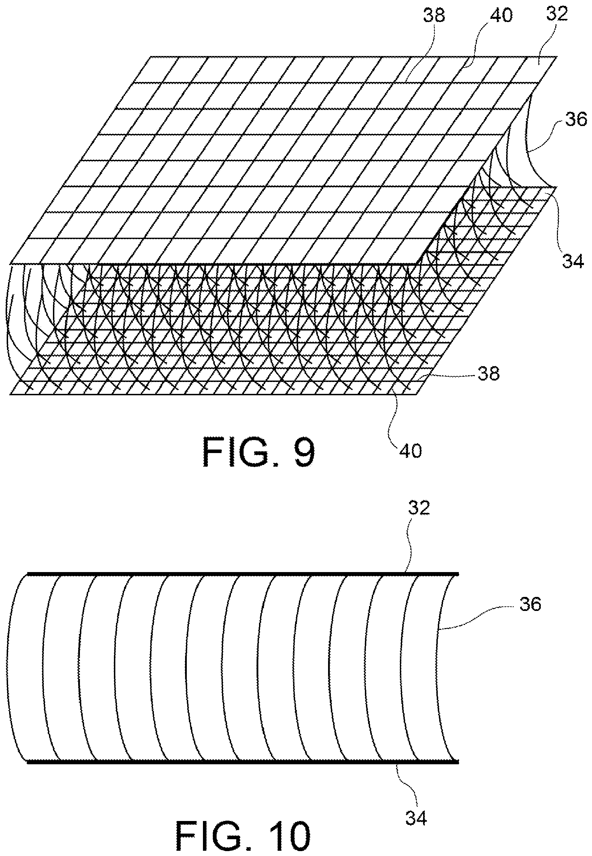

Comme l'illustrent les figures 9 et 10, qui montrent un tel textile dans sa configuration plane (déroulée), ce dernier est constitué de deux faces 32 et 34 s'étendant parallèlement l'une à l'autre et reliées l'une à l'autre par des fils de liaison 36. Les deux faces 32 et 34 sont chacune constituée d'un entrelacs de fils 38, 40 tissés ou tricotés, et forment respectivement une surface radialement interne et une surface radialement externe du filtre milieu filtrant 26. Les fils de liaison 36 sont tricotés aux deux faces 32 et 34.

Le choix et la densité des fils de liaison 36 ainsi que leur agencement déterminent le niveau de compressibilité du filtre. En effet, chaque fil de liaison 36 se comporte comme un ressort se déformant entre les deux faces 32 et 34, ces déformations pouvant combiner compression axiale, flexion et torsion.

Les textiles 3D à double paroi peuvent en particulier être tricotés en forme de cylindre continu, c'est-à-dire sans raccord. Ceci présente notamment l'avantage de permettre un écoulement gazeux uniforme autour de l'axe, dans la structure du textile.

Le textile constituant le filtre 25 présente de préférence les paramètres suivants :
- une épaisseur du textile comprise entre 2 et 70 millimètres ;
- une composition des fils formant les faces 32 et 34 et des fils de liaison 36 en un polyester tel que celui commercialisé sous l'appellation Coolmax (TM), ou en un terephtalate de polybutylène, ou en un polyamide, ou encore en un polymère à base de fibres d'aramides tel que le poly(p-phenylènetéréphtalamide) commercialisé sous l'appellation Kevlar (TM) ou le poly(m-phenylèneisophtalamide) commercialisé sous l'appellation Nomex (TM), ou en un élasthanne, ou en polytéréphtalate d'éthylène, ou en verre, ou en un des matériaux précédent gainé de silicone, les fils pouvant être formés de fibres conventionnelles ou de microfibres ;
- une densité comprise entre 20 et 500 kilogrammes par mètre-cube ;
- une constitution monofilament ou multifilament des fils de liaison 36 ; et
- un diamètre des fils de liaison 36 compris entre 10 et 1000 microns.

La composition du filtre 25 lui permet d'assurer une filtration de particules contenues dans un flux gazeux traversant le filtre, une telle filtration reposant par exemple sur au moins un mode d'action parmi :
- le tamisage, permettant de recueillir les particules présentant un diamètre supérieur à la distance entre deux fibres ;
- l'impact par inertie, c'est-à-dire le fait, pour de grosses particules ne pouvant suivre les lignes de courant (typiquement des particules de diamètre supérieur à 400 nanomètres), de se déplacer de façon uniforme en ligne droite et d'entrer en collision avec les fibres constituant le filtre ; ainsi, plus la matière filtrante est épaisse, plus une telle particule risque de frapper une fibre et d'être interceptée ;
- l'interception, c'est-à-dire le fait, pour des particules suivant les lignes de courant autour des fibres (typiquement des particules de diamètre compris entre 100 nanomètres et 400 nanomètres), d'être capturées lorsque la surface de la particule entre en contact avec la surface de la fibre et de se trouver liée à la fibre au moyen des forces de Van der Waals ; ce mécanisme est d'autant plus efficace que les fibres sont fines, et ce mécanisme présente la particularité de ne pas être affecté par la vitesse du flux gazeux ;

- la diffusion, c'est-à-dire le fait que la probabilité de rencontrer une fibre soit accrue du fait de mouvements browniens, pour de petites particules (typiquement des particules de diamètre inférieur à 100 nanomètre) ;
- l'attraction électrostatique, dans le cas de l'utilisation de fibres polymères chargées électrostatiquement.

Le registre aéraulique 20 comporte également un obturateur gonflable 42 agencé sur la surface radialement interne 28 du filtre 25.

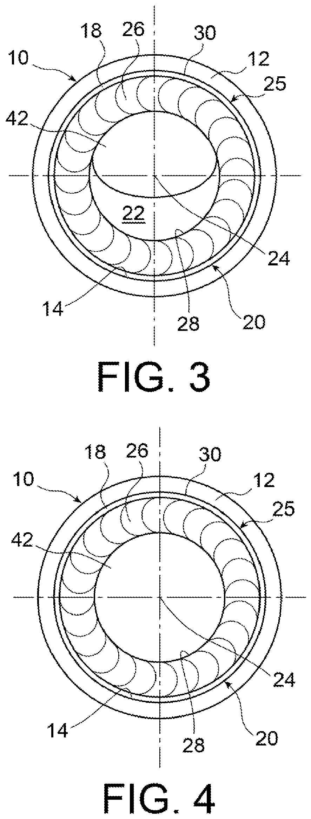

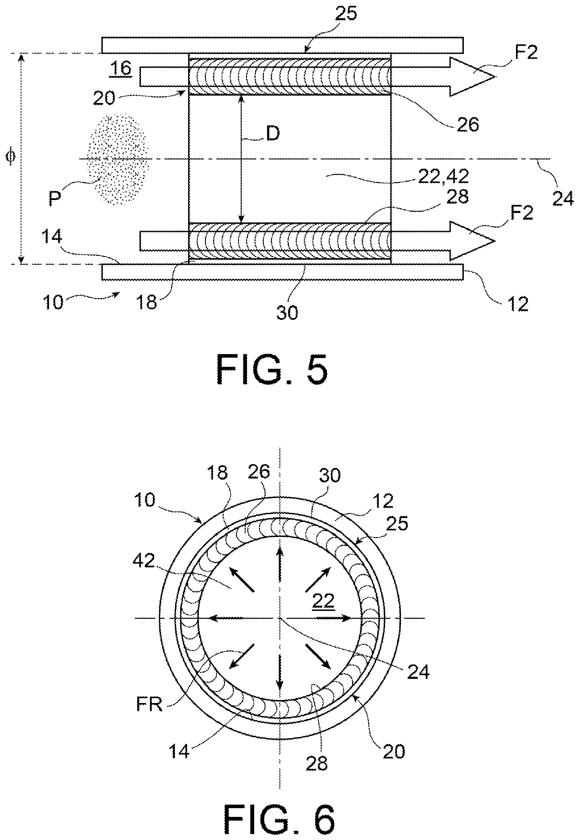

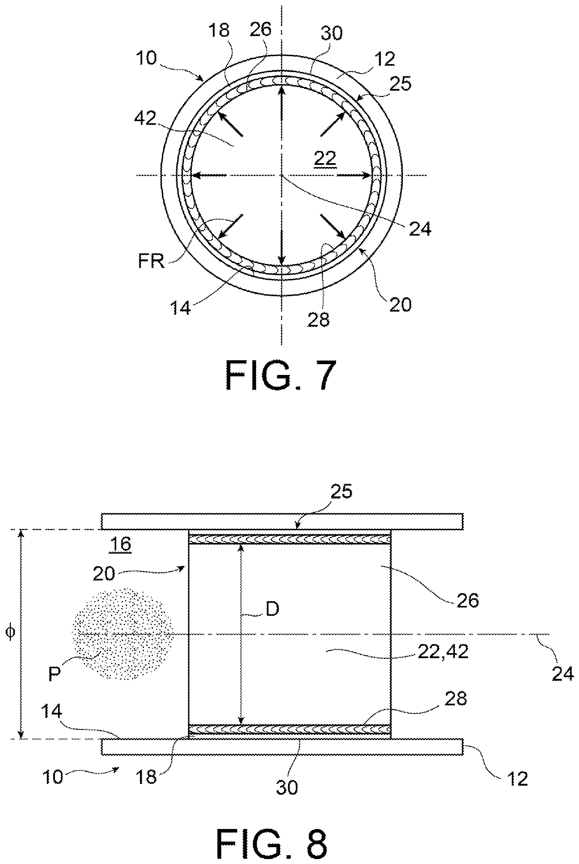

L'obturateur gonflable 42 est constitué d'une vessie conformée pour pouvoir passer d'un état dégonflé, dans lequel l'obturateur est sensiblement aplati et accolé à la surface radialement interne 28 du filtre 25 et occupe ainsi un volume faible au regard de la section du passage intérieur 22 (figures 1 et 2), de sorte qu'un flux gazeux F1 peut circuler librement au travers du passage intérieur 22 (figure 1), à un état gonflé à une première pression P1, dans lequel l'obturateur gonflable 42 obstrue le passage intérieur 22 (figures 4 et 5) et dans lequel un flux gazeux F2 ne peut circuler qu'au travers du filtre 25 (figure 4), puis à un état gonflé à une deuxième pression P2 supérieure à la première pression P1, dans lequel l'obturateur gonflable 42 obstrue le passage intérieur 22 et exerce sur le filtre 25 une force radiale FR qui comprime radialement le filtre 25 au point d'empêcher tout passage de gaz au travers du filtre 25 (figures 7 et 8). Il est clair, à cet effet, que dans l'état gonflé à la première pression P1, l'obturateur gonflable 42 exerce sur le filtre 25 une force de compression nulle ou suffisamment faible pour permettre la circulation du flux gazeux F2 au travers du filtre 25.

Ainsi, lorsque l'obturateur gonflable 42 est dans l'état dégonflé, le registre aéraulique 20 est dans un état passant (figures 1 et 2) ; lorsque l'obturateur gonflable 42 est dans l'état gonflé à la première pression P1, le registre aéraulique 20 est dans un état filtrant (figures 4 et 5) ; et lorsque l'obturateur gonflable 42 est dans l'état gonflé à la deuxième pression P2, le registre aéraulique 20 est dans un état non-passant (figures 7 et 8). Dans la terminologie de l'invention, ces trois états du registre aéraulique 20 définissent respectivement un état passant, un état filtrant, et un état non-passant, du tronçon de canalisation aéraulique 10.

La figure 3 illustre le registre aéraulique 20 au cours du gonflage de l'obturateur gonflable 42 avant que ce dernier n'ait atteint l'état gonflé à la première pression P1. Le passage intérieur 22 n'étant pas totalement obstrué par l'obturateur gonflable 42, le registre aéraulique 20 est encore dans son état passant sur la figure 3.

La figure 6 illustre le registre aéraulique 20 au cours du gonflage de l'obturateur gonflable 42, ce dernier étant gonflé à une pression intermédiaire comprise entre la première pression P1 et la deuxième pression P2. Le filtre 25 n'étant pas totalement comprimé par l'obturateur gonflable 42 du fait que la force radiale FR est alors à un niveau inférieur à son niveau sur la figure 7, le registre aéraulique 20 est encore dans son état filtrant sur la figure 6.

L'obturateur gonflable 42 est par exemple réalisé en un tissu enduit d'un élastomère ou d'une membrane en élastomère, par exemple du type couramment utilisé pour constituer des chambres à air de pneus.

L'obturateur gonflable 42 présente préférentiellement une étendue axiale comprise entre 10 et 100 centimètres, et un diamètre compris entre 10 et 150 centimètres lorsque l'obturateur gonflable est à la seconde pression P2.

Bien entendu, l'obturateur gonflable 42 comporte un raccord R par lequel l'obturateur gonflable 42 est relié à un dispositif de commande de pression de gonflage C (pouvant être intégré au registre aéraulique ou extérieur à ce dernier). Pour alléger les figures, le raccord R et le dispositif de commande de pression de gonflage C ne sont représentés, de manière schématique, que sur la figure 1.

Comme mentionné ci-dessus, dans les modes de réalisation préférés illustrés sur les figures, le filtre 25 comporte en outre la couche d'étanchéité 18, qui est interposée entre la surface intérieure 14 de la paroi de canalisation 12 et le milieu filtrant 26.

La couche d'étanchéité 18 a pour fonction de se déformer pour combler des cavités du milieu filtrant 26 se trouvant en compression, afin de parfaire l'étanchéité du registre aéraulique 20 à l'état non-passant.

À cet effet, la couche d'étanchéité 18 est réalisée en un matériau non perméable aux gaz et élastiquement déformable radialement par rapport à l'axe 24, et présente préférentiellement une épaisseur (dans la direction radiale) comprise entre 0,5 et 20 millimètres.

La couche d'étanchéité 18 est préférentiellement réalisée en un matériau élastomère, de préférence un fluoroélastomère tel que ceux respectivement commercialisés sous les appellations Viton (TM), Tecnoflon (TM), Dyneon (TM), ou encore en polyisobutylène, ou en un élastomère silicone, ou en latex, ou en tout autre matériau offrant une résistance chimique adéquate aux solvants et autres fluides agressifs.

En variante ou de manière complémentaire, le filtre 25 peut comprendre une couche d'étanchéité s'étendant à l'extrémité radiale interne du milieu filtrant 26, ou plus généralement du filtre 25, de manière à définir la surface radialement interne 28 du filtre. Une telle couche d'étanchéité (non visible sur les figures), réalisée selon les mêmes modalités que la couche d'étanchéité 18 décrite ci-dessus, est ainsi interposée entre le milieu filtrant 26 et l'obturateur gonflable 42, et a également pour fonction de se déformer pour combler des cavités du milieu filtrant 26 se trouvant en compression, afin de parfaire l'étanchéité du registre aéraulique 20, à l'état non-passant.

Le tronçon de canalisation aéraulique 10, initialement à l'état passant comme sur les figures 1 et 2, peut donc être fermé au moyen d'un procédé de fermeture consistant à gonfler l'obturateur gonflable 42 du registre aéraulique 20 (au moyen du dispositif de commande de pression de gonflage C) pour faire passer l'obturateur gonflable 42 de l'état dégonflé à l'état gonflé à la deuxième pression P2 comme sur les figures 7 et 8. Incidemment, l'obturateur gonflable 42 passe par les états intermédiaires illustrés sur les figures 3 à 6, notamment par l'état filtrant correspondant aux figures 4 et 5.

Le passage par l'état filtrant au cours de la fermeture du registre aéraulique peut être avantageux dans certaines applications. Notamment, le fait que la section de passage du flux gazeux est réduite dans cet état entraîne une augmentation de la vitesse de circulation du flux gazeux, ce qui accroît les chances d'entraîner d'éventuelles particules dans le flux gazeux traversant le milieu filtrant 26.

Le tronçon de canalisation aéraulique 10 peut ensuite être ouvert au moyen d'un procédé d'ouverture consistant à dégonfler progressivement l'obturateur gonflable 42 du registre aéraulique 20 (au moyen du dispositif de commande de pression de gonflage C) en faisant passer l'obturateur gonflable 42 de l'état gonflé à la deuxième pression P2, comme sur les figures 7 et 8, à l'état gonflé à la première pression P1, comme sur les figures 4 et 5 (en passant par l'état intermédiaire de la figure 6) puis à l'état dégonflé, comme sur les figures 1 et 2 (en passant par l'état intermédiaire de la figure 3).

Ce procédé implique donc un passage du registre aéraulique 20 par l'état filtrant avant d'atteindre l'état passant.

De cette manière, des particules P éventuellement contenues dans le gaz (ou l'air) présent du côté interne du tronçon de canalisation aéraulique 10 lorsque le registre aéraulique se trouve à l'état non-passant (figure 8), sont transportées au sein du filtre 25 par le flux gazeux F2 contraint de circuler au travers du filtre 25 (figure 5) et sont piégées par ce filtre, lorsque le tronçon de canalisation aéraulique 10 atteint l'état passant au cours d'une manœuvre d'ouverture du tronçon de canalisation aéraulique 10, ce qui permet d'éviter que de telles particules ne soient relâchées dans le milieu environnant.

Les procédés d'ouverture et de fermeture peuvent être mis en œuvre moyennant une variation continue de la pression dans l'obturateur gonflable 42.

En variante, la pression dans l'obturateur gonflable 42 peut être maintenue égale à la première pression P1 pendant une durée déterminée au cours du procédé d'ouverture et/ou du procédé de fermeture, afin de prolonger la durée de l'état filtrant.

En variante, la pression dans l'obturateur gonflable 42 peut être commandée pour osciller autour de la première pression P1, pendant une durée déterminée, au cours du procédé d'ouverture et/ou du procédé de fermeture, afin de faire varier dynamiquement le diamètre de l'obturateur gonflable 42 et donc de faire varier dynamiquement la section de passage du milieu filtrant 26. La variabilité des conditions d'écoulement qui en résulte favorise en général l'interception de particules par le milieu filtrant 26.

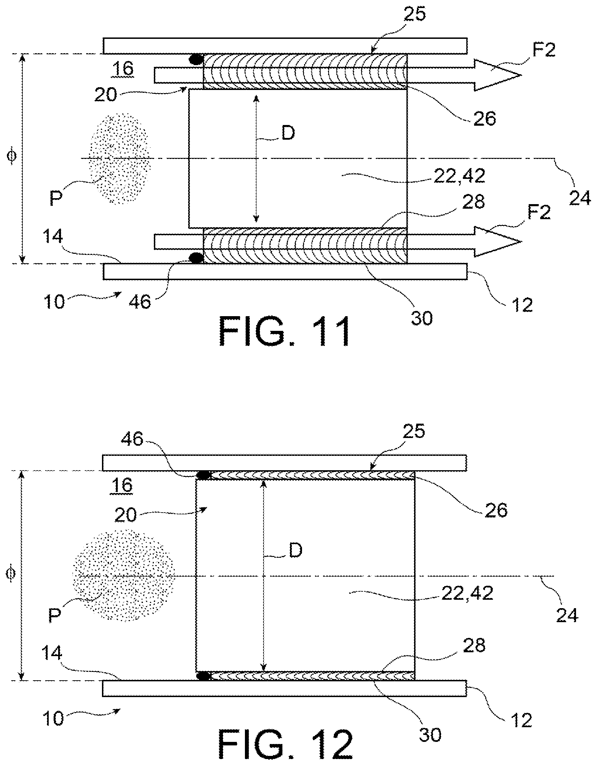

Dans une variante de réalisation de l'invention illustrée par les figures 11 et 12, le tronçon de canalisation aéraulique 10 comporte un bourrelet d'étanchéité 46 axialement adjacent au filtre 25 de manière à être interposé radialement entre l'obturateur gonflable 42 et la surface intérieure 14 de la paroi de canalisation 12.

À l'état filtrant (figure 11), un espace est ménagé entre le bourrelet d'étanchéité 46 et l'obturateur gonflable 42 de sorte que le flux gazeux F2 peut circuler entre ces éléments et atteindre ainsi le milieu filtrant 26 du filtre 25.

En revanche, à l'état non-passant (figure 12), l'obturateur gonflable 42 comprime radialement le bourrelet d'étanchéité 46 de sorte que ce dernier empêche le flux gazeux d'atteindre le milieu filtrant 26 du filtre 25.

Le bourrelet d'étanchéité 46 assure ainsi une fonction d'étanchéité similaire à celle de la fonction de la couche d'étanchéité 18 décrite ci-dessus.

Le filtre 25 du registre aéraulique des figures 11 et 12 est en particulier dépourvu de couche d'étanchéité.

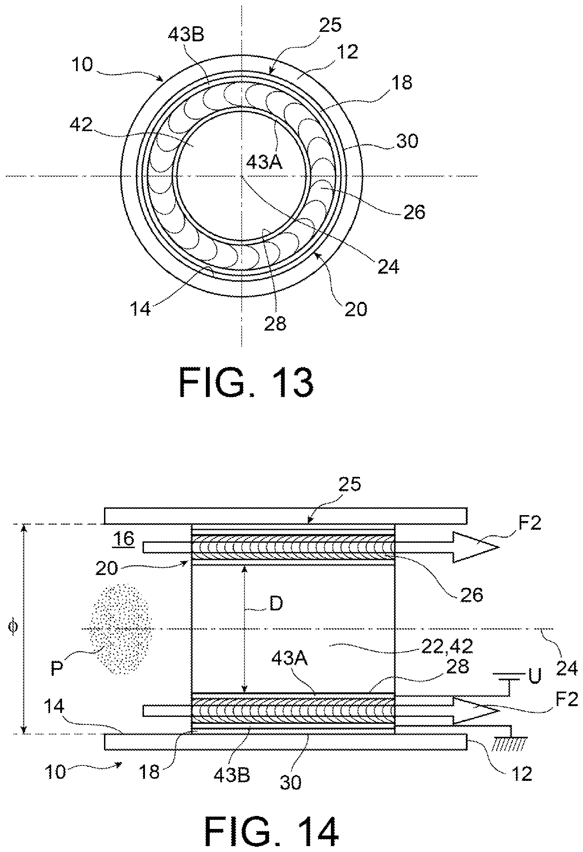

Par ailleurs, dans une variante illustrée sur les figures 13 et 14, le filtre 25 comporte en outre deux électrodes 43A et 43B configurées pour générer un champ électrique radial, ou ayant une composante radiale, au sein du milieu filtrant 26, de sorte que les deux électrodes 43A et 43B et le milieu filtrant 26 forment ensemble un collecteur électrostatique.

À cet effet, les deux électrodes 43A et 43B sont agencées respectivement radialement à l'intérieur et à l'extérieur du milieu filtrant 26 et sont respectivement reliées électriquement à une source de tension U et à la masse.

Les deux électrodes 43A et 43B prennent par exemple la forme générale de deux cylindres de révolution agencés respectivement sur la surface radialement interne et sur la surface radialement externe du milieu filtrant 26. Dans ce cas, les deux électrodes 43A et 43B sont par exemple réalisées chacune en un film métallique plissé, par exemple en aluminium, conçu pour pouvoir se déformer radialement en expansion et en contraction. Les électrodes 43A et 43B sont ainsi en mesure d'accompagner les déformations du milieu filtrant 26 entre les différents états du registre aéraulique. Dans le mode de réalisation illustré, l'électrode 43B est interposée entre le milieu filtrant 26 et la couche d'étanchéité 18 décrite ci-dessus qui forme la surface radialement externe 30 du filtre 25. De plus, l'électrode 43A définit dans ce cas la surface radialement interne 28 du filtre 25 (en l'absence de couche d'étanchéité à l'extrémité radialement interne du filtre).

Le champ électrique généré par les électrodes permet de dévier radialement les particules chargées, éventuellement portées par le flux gazeux F2, et à augmenter ainsi la probabilité pour ces particules de rencontrer le milieu filtrant 26 (en l'occurrence, les fibres du textile composant le milieu filtrant) ou l'une des électrodes (et d'y rester retenues par des forces d'attraction).

Dans une variante de réalisation, un tel registre aéraulique comporte en outre un ioniseur en amont du filtre 25 afin de charger électriquement d'éventuelles particules initialement neutres portées par le flux gazeux F2, et accroître ainsi l'efficacité du filtre 25 à l'égard de telles particules.

Dans le mode de réalisation illustré sur les figures 1-8, le filtre 25 présente une section de passage constante le long de l'axe 24, ce qui se traduit par un diamètre intérieur D du filtre 25 (c'est-à-dire un diamètre de la surface radialement interne 28 du filtre 25) également constant le long de l'axe 24.

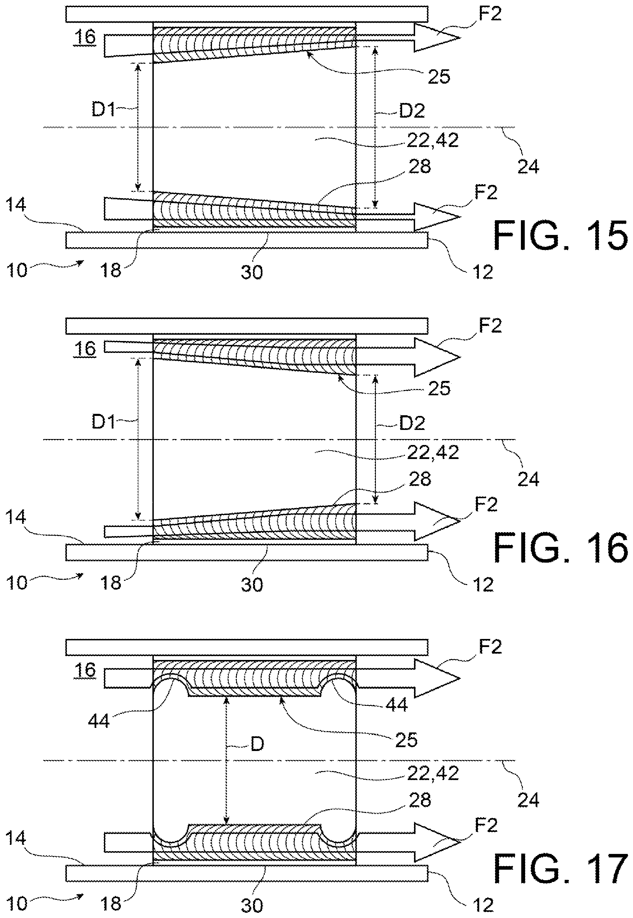

En variante, comme le montrent les figures 15 à 17, le filtre 25 présente une section de passage variant le long de l'axe 24.

Ainsi, dans la variante de la figure 15, la section de passage se réduit progressivement depuis le côté interne jusqu'au côté externe, si bien que le diamètre intérieur s'accroît progressivement depuis le côté interne (voir la référence D1) jusqu'au côté externe (voir la référence D2).

À l'inverse, dans la variante de la figure 16, la section de passage s'accroît progressivement depuis le côté interne jusqu'au côté externe, si bien que le diamètre intérieur se réduit progressivement depuis le côté interne (voir la référence D1) jusqu'au côté externe (voir la référence D2).

Enfin, la variante de la figure 17 montre un exemple de variation plus complexe de la section de passage, avec par exemple deux étranglements respectivement produits par deux rainures 44 formées dans la surface radialement interne 28 du filtre 25.

L'obtention de variations de la section de passage du filtre 25 peut résulter d'une compressibilité radiale du filtre qui varie le long de l'axe 24 et/ou du fait que l'obturateur gonflable 42 soit conformé pour appliquer au filtre 25 une force de compression radiale qui varie le long de l'axe 24, lorsque l'obturateur gonflable est dans l'état gonflé à la première pression P1.

Une telle variabilité de la section de passage du filtre 25 permet au registre aéraulique de concilier des propriétés antagonistes, telles qu'une étanchéité optimale, permise par la ou les portions du filtre ayant une section de passage réduite, et un pouvoir filtrant optimal alliée à une perte de charge limitée, permis par la ou les portions du filtre ayant une section de passage plus grande.

Dans certains cas, la variabilité de la section de passage du filtre 25 est mise en œuvre de manière à induire un dépôt préférentiel des particules selon leur dimension le long du filtre 25. Une telle configuration permet de répartir le niveau de colmatage du filtre 25 le long de ce dernier, et de prolonger ainsi la durée de vie du filtre.

Plus généralement, la variabilité de la section de passage du filtre 25 permet de modifier les conditions de l'écoulement gazeux le long du filtre 25 et d'augmenter de ce fait la probabilité d'interception de particules.

Le même type d'avantage peut être obtenu en agençant en série plusieurs registres aérauliques du type décrit ci-dessus.

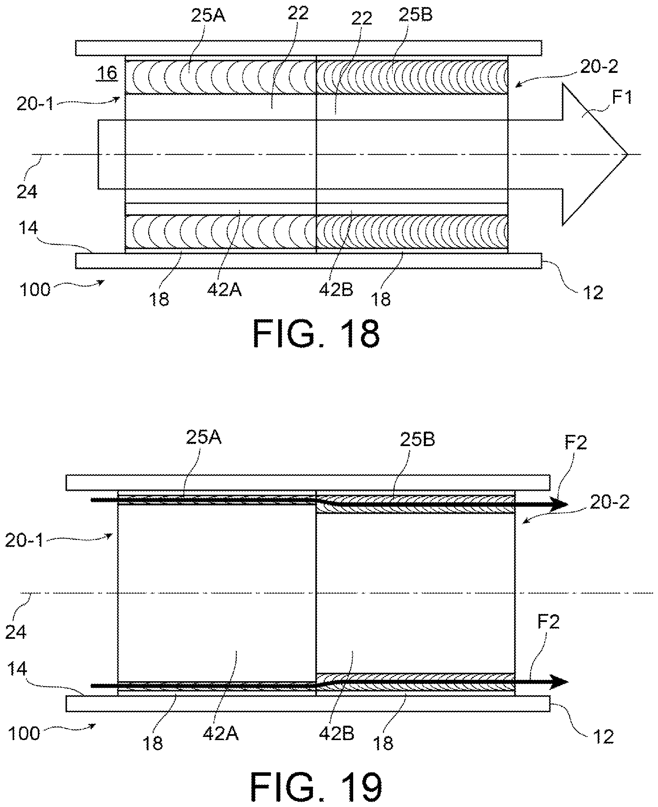

Ainsi, les figures 18 à 20 illustrent un tronçon de canalisation aéraulique 100 selon un autre mode de réalisation préféré de l'invention, comprenant deux registres aérauliques 20A et 20B adjacents, c'est-à-dire agencés l'un à la suite de l'autre le long de l'axe 24, et ayant des propriétés différentes.

Plus précisément, le filtre 25B du second registre aéraulique 20B présente un pouvoir filtrant supérieur à celui du filtre 25A du premier registre aéraulique 20A et une compressibilité radiale inférieure à celle du filtre 25A du premier registre aéraulique 20A.

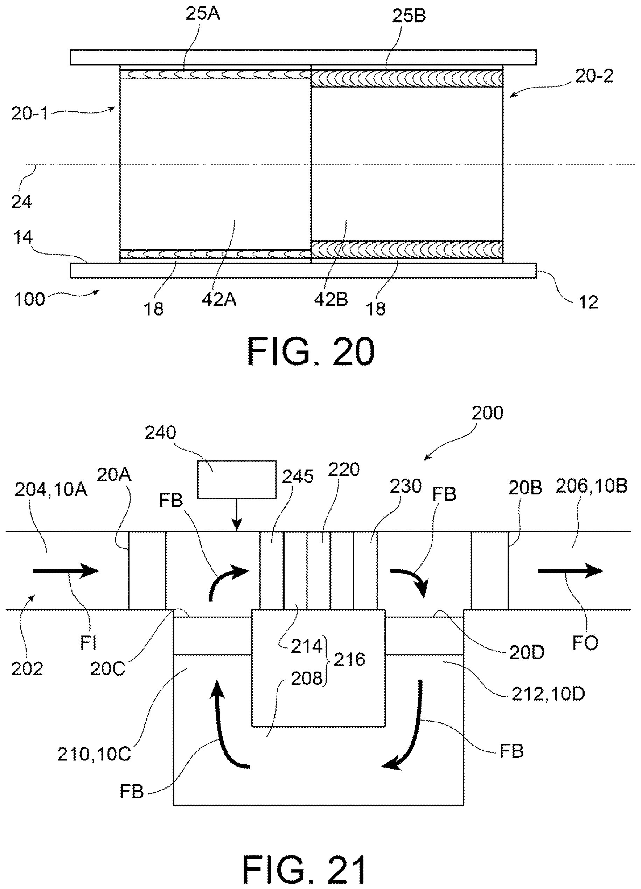

Les premier et second registres aérauliques 20A, 20B définissent ensemble :
- un état passant du tronçon de canalisation aéraulique 100 lorsque les premier et second registres aérauliques 20A, 20B sont chacun à l'état passant (figure 18),
- un état filtrant du tronçon de canalisation aéraulique 100 lorsque les premier et second registres aérauliques 20A, 20B sont chacun à l'état filtrant (figure 19), et
- un état non-passant du tronçon de canalisation aéraulique 100 lorsque le premier registre aéraulique 20A est à l'état non-passant et que le second registre aéraulique 20B est à l'état filtrant ou non-passant (figure 20).

La compressibilité radiale supérieure du filtre 25A du premier registre aéraulique 20A permet un meilleur écrasement de ce filtre sous l'effet de la pression exercée par l'obturateur gonflable 42A du premier registre aéraulique 20A, et permet donc d'optimiser l'étanchéité du premier registre aéraulique 20A lorsque ce dernier est à l'état non-passant, et donc d'optimiser l'étanchéité du tronçon de canalisation aéraulique 100 lorsque ce dernier est globalement à l'état non-passant défini ci-dessus.

L'obtention d'une compressibilité radiale élevée en ce qui concerne le filtre 25A du premier registre aéraulique 20A résulte par exemple d'une limitation du nombre de fils de liaison 36 au sein de ce filtre, au prix d'une limitation du pouvoir filtrant de ce filtre.

À l'inverse, le pouvoir filtrant supérieur du filtre 25B du second registre aéraulique 20B permet d'assurer une filtration efficace au travers de ce filtre 25B, et de compenser ainsi le pouvoir filtrant réduit du filtre 25A du premier registre aéraulique 20A, tout en limitant la perte de charge au travers du filtre 25B.

L'obtention d'un pouvoir filtrant élevé en ce qui concerne le filtre 25B du second registre aéraulique 20B résulte par exemple d'une maximisation du nombre de fils de liaison 36 au sein de ce filtre, se traduisant par une limitation de la compressibilité radiale de ce filtre.

Une telle configuration permet donc de concilier des propriétés antagonistes, tels qu'un bon pouvoir filtrant à l'état filtrant et une bonne étanchéité à l'état non-passant, au sein d'un même tronçon de canalisation.

Il est à noter que dans les modes de réalisation illustrés ci-dessus, l'espace de circulation de gaz 16 du tronçon de canalisation, et le passage intérieur 22 du filtre 25, sont de forme tubulaire.

En variante, l'espace de circulation de gaz 16 du tronçon de canalisation et le passage intérieur 22 du filtre 25 peuvent être de forme annulaire, c'est-à-dire s'étendre autour d'une structure centrale, sans sortir du cadre de l'invention. La structure centrale précitée peut typiquement être une autre canalisation.

En référence à la figure 21, un exemple d'utilisation de registres aérauliques du type décrit ci-dessus va maintenant être présenté.

La figure 21 illustre schématiquement un système 200 de traitement de gaz, en particulier un système pour l'épuration de l'air intérieur de bâtiments, apte à fonctionner de manière alternée dans un mode de traitement et dans un mode de régénération.

Ce système 200 comprend par exemple :
- un canal principal 202 présentant une entrée 204 et une sortie 206 ;
- un canal secondaire 208 séparé du canal principal 202 et présentant deux extrémités opposées 210, 212 raccordées au canal principal 202 de sorte que le canal secondaire 208 et une portion médiane 214 du canal principal, agencée entre l'entrée 204 et la sortie 206, forment une boucle fermée 216 dans le mode de régénération ;
- un dispositif de captation 220 disposé dans la portion médiane 214 du canal principal 202, et adapté pour capter certaines substances, tels que des composés organiques volatils, éventuellement présentes dans un flux gazeux FI, FO circulant dans le canal principal 202 dans le mode de traitement, par exemple par adsorption ;
- un dispositif de régénération 230, par exemple un générateur d'ozone, disposé dans la boucle fermée 216, par exemple dans la portion médiane 214 du canal principal 202, et adapté pour libérer le dispositif de captation 220 des substances qu'il a préalablement captées et décomposer ces substances, dans le mode de régénération ; et
- un dispositif de commutation configuré pour maintenir l'entrée 204 et la sortie 206 ouvertes, maintenir le dispositif de régénération 230 à l'arrêt, et, de préférence, isoler le canal secondaire 208 du canal principal 202, dans le mode de traitement, et pour maintenir l'entrée 204 et la sortie 206 fermées, faire communiquer le canal secondaire 208 avec le canal principal 202, et maintenir le dispositif de régénération 230 en fonctionnement, dans le mode de régénération.

À cet effet, le dispositif de commutation comporte quatre tronçons de canalisation aéraulique 10A, 10B, 10C, 10D qui forment respectivement l'entrée 204 et la sortie 206 du canal principal 202 et les deux extrémités opposées 210, 212 du canal secondaire 208, et qui comprennent des registres aérauliques respectifs 20A, 20B, 20C, 20D. Au moins les deux premiers tronçons de canalisation aéraulique 10A et 10B sont du type décrit ci-dessus.

Le système comporte également au moins un ventilateur 245 disposé dans la boucle fermée 216 et configuré pour propulser le gaz (ou l'air) au sein de la boucle fermée 216, dans le mode de régénération, et au sein du canal principal 202, dans le mode de traitement.

Le dispositif de commutation comporte typiquement une unité de commande 240 configurée pour commander les registres aérauliques respectifs 20A, 20B, 20C, 20D des tronçons de canalisation aéraulique 10A, 10B, 10C, 10D ainsi que le dispositif de régénération 230 et le ventilateur 245.

En fonctionnement en mode de traitement, les tronçons 10A et 10B formant respectivement l'entrée 204 et la sortie 206 du canal principal 202 sont à l'état passant pour permettre l'admission, par l'entrée 204, d'un flux gazeux FI (par exemple de l'air) provenant du milieu extérieur, et le rejet, par la sortie 206, d'un flux gazeux traité FO, tandis que les tronçons 10C et 10D formant respectivement les deux extrémités opposées 210, 212 du canal secondaire 208 sont à l'état non-passant de manière à isoler le canal secondaire 208 du canal principal 202. Dans ce mode de fonctionnement, certaines substances éventuellement présentes dans le flux gazeux FI admis dans le canal principal sont captées par le dispositif de captation 220 de sorte que le flux gazeux FO rejeté par la sortie 206 présente une teneur plus faible, voire nulle, en ces substances.

Le passage du mode de traitement au mode de régénération s'effectue en inversant l'état des registres aérauliques respectifs des quatre tronçons de canalisation aéraulique 10A, 10B, 10C, 10D, de sorte que les tronçons 10C et 10D soient à l'état passant de manière à constituer la boucle fermée 216, tandis que les tronçons 10A et 10B soient à l'état non-passant de manière à isoler la boucle fermée 216 du milieu extérieur.

Dans ce mode de fonctionnement, un flux gazeux FB est entretenu dans la boucle fermée afin de favoriser l'action du dispositif de régénération 230 sur le dispositif de captation 220. Les substances préalablement captées par le dispositif de captation 220 sont libérées de ce dernier sous l'action du dispositif de régénération 230, le cas échéant par désorption. Ces substances peuvent être libérées sous leur forme initiale, et être éventuellement décomposées sous l'action du dispositif de régénération 230 après leur libération, ou bien être décomposées sous l'action du dispositif de régénération 230 puis libérées sous forme décomposée.

Il se produit généralement une élévation de température pouvant atteindre plusieurs dizaines de degrés au sein de la boucle fermée 216, du fait du confinement du ventilateur 245 et/ou du fait de réactions exothermiques d'oxydation. Une conséquence de cette élévation en température à volume constant est la mise en surpression de la boucle fermée 216.

Par ailleurs, il peut également se produire la formation d'aérosols organiques du fait de la dégradation chimique de certains composés organiques. Par exemple, dans le cas du traitement de composés organiques volatils, des réactions par les oxydes d'azote (NOx) ou par l'ozone (O3) peuvent aboutir à la formation d'espèces semi-volatiles, c'est-à-dire dont les tensions de vapeur sont faibles. Ces produits peuvent se déposer à la surface de particules pré-existantes (selon un phénomène de condensation hétérogène) ou former de nouvelles particules (selon un phénomène de nucléation homogène ou de conversion gaz-particule).

À la fin d'un cycle de régénération, le retour au mode de traitement s'effectue en inversant de nouveau l'état des registres aérauliques respectifs des quatre tronçons de canalisation aéraulique 10A, 10B, 10C, 10D.

Du fait de la mise en surpression de la boucle fermée 216, au moment du retour au mode de traitement, du gaz issu de la boucle fermée 216 va avoir tendance à s'échapper par la sortie 206 et éventuellement aussi par l'entrée 204, en emportant avec lui les éventuelles particules précitées.

Toutefois, du fait que les registres aérauliques 20A, 20B respectifs des tronçons 10A et 10B passent par l'état filtrant avant d'atteindre l'état passant, ces éventuelles particules sont piégées dans les filtres respectifs de ces registres aérauliques 20A, 20B au moment du passage par l'état filtrant, et ne sont donc pas relâchées dans le milieu extérieur.

## Revendications

1. Registre aéraulique (20), comprenant un passage intérieur (22) s'étendant selon un axe (24), le registre aéraulique (20) comprenant en outre :
- un filtre (25) qui s'étend tout autour du passage intérieur (22), le filtre présentant une surface radialement interne (28) qui délimite extérieurement le passage intérieur (22), et une surface radialement externe (30) destinée à être fixée sur une surface intérieure (14) d'une paroi de canalisation (12), et le filtre (25) comprenant un milieu filtrant (26) qui est élastiquement déformable radialement par rapport à l'axe (24) et qui est agencé entre la surface radialement interne (28) et la surface radialement externe (30) ; et
- un obturateur gonflable (42) agencé sur la surface radialement interne (28) du filtre (25) et apte à adopter un état dégonflé, correspondant à un état passant du registre aéraulique (20), dans lequel une libre circulation de gaz est possible au travers du passage intérieur (22), un état gonflé à une première pression, correspondant à un état filtrant du registre aéraulique (20), dans lequel l'obturateur gonflable (42) obstrue le passage intérieur (22) et dans lequel une circulation de gaz est possible au travers du filtre (25), et un état gonflé à une deuxième pression supérieure à la première pression, correspondant à un état non-passant du registre aéraulique (20), dans lequel l'obturateur gonflable (42) obstrue le passage intérieur (22) et comprime radialement le filtre (25) au point d'empêcher tout passage de gaz au travers du filtre (25).

2. Registre aéraulique selon la revendication 1, dans lequel le milieu filtrant (26) est formé d'un textile 3D à double paroi.

3. Registre aéraulique selon la revendication 1 ou 2, dans lequel le filtre (25) présente une géométrie de révolution autour de l'axe (24).

4. Registre aéraulique selon l'une quelconque des revendications 1 à 3, dans lequel le filtre (25) présente une section de passage qui varie le long de l'axe (24).

5. Registre aéraulique selon l'une quelconque des revendications 1 à 4, dans lequel le filtre (25) comporte en outre au moins une couche d'étanchéité (18), qui est réalisée en un matériau non perméable aux gaz et élastiquement déformable radialement par rapport à l'axe (24), et qui s'étend à une extrémité radiale du milieu filtrant (26) de manière à définir au moins l'une parmi la surface radialement interne (28) et la surface radialement externe (30).

6. Registre aéraulique selon l'une quelconque des revendications 1 à 5, dans lequel le filtre (25) comporte en outre deux électrodes (43A, 43B) configurées pour générer au sein du milieu filtrant (26) un champ électrique radial, ou ayant une composante radiale.

7. Tronçon de canalisation aéraulique (10), comprenant une paroi de canalisation (12) présentant une surface intérieure (14) qui délimite un espace de circulation de gaz (16), et un registre aéraulique (20) selon l'une quelconque des revendications 1 à 6 fixé sur la surface intérieure (14) de la paroi de canalisation.

8. Tronçon de canalisation aéraulique selon la revendication 7, dans lequel ledit registre aéraulique est un premier registre aéraulique (20A), ledit tronçon de canalisation aéraulique comprenant en outre un second registre aéraulique (20B) selon l'une quelconque des revendications 1 à 6 fixé sur la surface intérieure (14) de la paroi de canalisation (12) et axialement adjacent audit premier registre aéraulique (20A), le filtre (25B) du second registre aéraulique (20B) présentant un pouvoir filtrant supérieur à celui du filtre (25A) du premier registre aéraulique (20A) et une compressibilité radiale inférieure à celle du filtre (25A) du premier registre aéraulique (20A), de sorte que les premier et second registres aérauliques (20A, 20B) définissent :
- un état passant du tronçon de canalisation aéraulique (10) lorsque les premier et second registres aérauliques (20A, 20B) sont chacun à l'état passant,
- un état filtrant du tronçon de canalisation aéraulique (10) lorsque les premier et second registres aérauliques (20A, 20B) sont chacun à l'état filtrant, et
- un état non-passant du tronçon de canalisation aéraulique (10) lorsque le premier registre aéraulique (20A) est à l'état non-passant et que le second registre aéraulique (20B) est à l'état filtrant ou non-passant.

9. Système de traitement de gaz (200), apte à fonctionner de manière alternée dans un mode de traitement et dans un mode de régénération, comprenant :
- un canal principal (202) présentant une entrée (204) et une sortie (206) ;
- un canal secondaire (208) séparé du canal principal (202) et présentant deux extrémités opposées (210, 212) raccordées au canal principal (202) de sorte que le canal secondaire (208) et une portion médiane (214) du canal principal (202), agencée entre l'entrée (204) et la sortie (206), forment une boucle fermée (216) dans le mode de régénération ;
- un dispositif de captation (220) disposé dans la portion médiane (214) du canal principal, et adapté pour capter certaines substances éventuellement présentes dans un flux gazeux circulant dans le canal principal, dans le mode de traitement ;
- un dispositif de régénération (230) disposé dans la boucle fermée (216) et adapté pour libérer le dispositif de captation (220) de substances qu'il a préalablement captées, dans le mode de régénération ; et
- un dispositif de commutation configuré pour maintenir l'entrée (204) et la sortie (206) ouvertes, isoler le canal secondaire (208) du canal principal (202), et maintenir le dispositif de régénération (203) à l'arrêt, dans le mode de traitement, et pour maintenir l'entrée (204) et la sortie (206) fermées, faire communiquer le canal secondaire (208) avec la portion médiane (214) du canal principal (202), et maintenir le dispositif de régénération (230) en fonctionnement, dans le mode de régénération ;
**caractérisé en ce que** le dispositif de commutation comporte au moins deux tronçons de canalisation aéraulique (10A, 10B) selon l'une quelconque des revendications 7 à 8, formant respectivement l'entrée (204) et la sortie (206) du canal principal (202).

10. Procédé d'ouverture d'un tronçon de canalisation aéraulique (10) comprenant une paroi de canalisation (12) présentant une surface intérieure (14) qui délimite un espace de circulation de gaz (16), au moyen d'un registre aéraulique (20) selon l'une quelconque des revendications 1 à 6 fixé sur la surface intérieure (14) de la paroi de canalisation (12), le procédé consistant à faire passer l'obturateur gonflable (42) du registre aéraulique (20) de l'état gonflé à la deuxième pression à l'état gonflé à la première pression puis à l'état dégonflé.

## Patentansprüche

1. Lufttechnisches Register (20), umfassend ein Lumen (22), das sich entlang einer Achse (24) erstreckt, wobei das lufttechnische Register (20) ferner umfasst:
- einen Filter (25), der sich ganz um das Lumen (22) erstreckt, wobei der Filter eine radiale Innenfläche (28) aufweist, die das Lumen (22) außen begrenzt, und eine radiale Außenfläche (30), die dazu bestimmt ist, an einer Innenfläche (14) einer Kanalisationswand (12) befestigt zu werden, und der Filter (25) ein Filtermedium (26) umfasst, das radial bezüglich der Achse (24) elastisch verformt werden kann und das zwischen der radialen Innenfläche (28) und der radialen Außenfläche (30) angeordnet ist; und
- eine aufblasbare Blende (42), die an der radialen Innenfläche (28) des Filters (25) angeordnet und angepasst ist, um einen entlüfteten Zustand, der einem Pass-Zustand des lufttechnischen Registers (20) entspricht, in dem eine freie Zirkulation von Gas durch das Lumen (22) möglich ist, einen belüfteten Zustand mit einem ersten Druck, der einem Filter-Zustand des lufttechnischen Registers (20) entspricht, in dem die aufblasbare Blende (42) das Lumen (22) verstopft und in dem eine Zirkulation von Gas durch den Filter (25) möglich ist, und einen belüfteten Zustand mit einem zweiten Druck, der höher als der erste Druck ist, der einem Non-Pass-Zustand des lufttechnischen Registers (20) entspricht, in dem die aufblasbare Blende (42) das Lumen (22) verstopft und den Filter (25) soweit radial komprimiert, dass jeder Durchlass von Gas durch den Filter (25) verhindert wird, anzunehmen.

2. Lufttechnisches Register nach Anspruch 1, wobei das Filtermedium (26) aus einem doppelwandigen 3D-Gewebe geformt ist.

3. Lufttechnisches Register nach Anspruch 1 oder 2, wobei der Filter (25) eine drehsymmetrische Geometrie um die Achse (24) aufweist.

4. Lufttechnisches Register nach einem der Ansprüche 1 bis 3, wobei der Filter (25) einen Lumenquerschnitt aufweist, der entlang der Achse (24) variiert.

5. Lufttechnisches Register nach einem der Ansprüche 1 bis 4, wobei der Filter (25) ferner mindestens eine Dichtungsschicht (18) umfasst, die aus einem gasundurchlässigen und radial in Bezug auf die Achse (24) elastisch verformbaren Material besteht und sich so zu einem radialen Ende des Filtermediums (26) erstreckt, dass mindestens eine der radialen Innenfläche (28) und der radialen Außenfläche (30) definiert wird.

6. Lufttechnisches Register nach einem der Ansprüche 1 bis 5, wobei der Filter (25) ferner zwei Elektroden (43A, 43B) umfasst, die konfiguriert sind, um innerhalb des Filtermediums (26) ein radiales oder eine radiale Komponente aufweisendes elektrisches Feld zu erzeugen.

7. Abschnitt einer lufttechnischen Kanalisation (10), umfassend eine Kanalisationswand (12), die eine Innenfläche (14), die einen Gaszirkulationsraum (16) begrenzt, und ein lufttechnisches Register (20) nach einem der Ansprüche 1 bis 6, das an der Innenfläche (14) der Kanalisationswand befestigt ist, umfasst.

8. Abschnitt einer lufttechnischen Kanalisation nach Anspruch 7, wobei das lufttechnische Register ein erstes lufttechnisches Register (20A) ist, wobei der Abschnitt der lufttechnischen Kanalisation ferner ein zweites lufttechnisches Register (20B) nach einem der Ansprüche 1 bis 6 umfasst, das an der Innenfläche (14) der Kanalisationswand (12) und axial angrenzend an das erste lufttechnische Register (20A) befestigt ist, wobei der Filter (25B) des zweiten lufttechnischen Registers (20B) eine Filterleistung, die höher als die des Filters (25A) des ersten lufttechnischen Registers (20A) ist, und eine radiale Komprimierbarkeit aufweist, die niedriger als die des Filters (25A) des ersten lufttechnischen Registers (20A) ist, so dass die ersten und zweiten lufttechnischen Register (20A, 20B) definieren:
- einen Pass-Zustand des Abschnitts der lufttechnischen Kanalisation (10), wenn die ersten und zweiten lufttechnischen Register (20A, 20B) jeweils im Pass-Zustand sind,
- einen Filter-Zustand des Abschnitts der lufttechnischen Kanalisation (10), wenn die ersten und zweiten lufttechnischen Register (20A, 20B) jeweils im Filter-Zustand sind, und
- einen Non-Pass-Zustand des Abschnitts der lufttechnischen Kanalisation (10), wenn das erste lufttechnische Register (20A) im Non-Pass-Zustand ist und das zweite lufttechnische Register (20B) im Filter- oder im Non-Pass-Zustand ist.

9. System zur Gasaufarbeitung (200), das geeignet ist, um abwechselnd in einem Aufarbeitungsmodus und einem Regenerationsmodus zu funktionieren, umfassend:
- einen Hauptkanal (202), der einen Eingang (204) und einen Ausgang (206) aufweist;
- einen Nebenkanal (208), der vom Hauptkanal (202) getrennt ist und zwei entgegengesetzte Enden (210, 212) aufweist, die mit dem Hauptkanal (202) verbunden sind, so dass der Nebenkanal (208) und ein Medianabschnitt (214) des Hauptkanals (202), der zwischen dem Eingang (204) und dem Ausgang (206) angeordnet ist, im Regenerationsmodus einen geschlossenen Kreislauf (216) formen;
- eine Auffangvorrichtung (220), die im Medianabschnitt (214) des Hauptkanals angeordnet und angepasst ist, um im Aufarbeitungsmodus bestimmte Substanzen aufzufangen, die eventuell in einem im Hauptkanal zirkulierenden Gasfluss vorhanden sind;
- eine Regenerationsvorrichtung (230), die im geschlossenen Kreislauf (216) angeordnet und angepasst ist, um im Regenerationsmodus die Auffangvorrichtung (220) von den Substanzen zu befreien, die sie zuvor aufgefangen hat; und
- eine Umschaltvorrichtung, die dazu konfiguriert ist, um im Aufarbeitungsmodus den Eingang (204) und den Ausgang (206) offen zu halten, den Nebenkanal (208) vom Hauptkanal (202) zu trennen und die Regenerationsvorrichtung (203) anzuhalten, und um im Regenerationsmodus den Eingang (204) und den Ausgang (206) geschlossen zu halten, den Nebenkanal (208) mit dem Medianabschnitt (214) des Hauptkanals (202) zu verbinden und die Regenerationsvorrichtung (230) in Funktion zu halten;
**dadurch gekennzeichnet, dass** die Umschaltvorrichtung mindestens zwei Abschnitte der lufttechnischen Kanalisation (10A, 10B) nach einem der Ansprüche 7 bis 8 umfasst, die jeweils den Eingang (204) und den Ausgang (206) des Hauptkanals (202) formen.

10. Verfahren zum Öffnen eines Abschnitts einer lufttechnischen Kanalisation (10), umfassend eine Kanalisationswand (12), die eine Innenfläche (14) aufweist, die einen Gaszirkulationsraum (16) begrenzt, mittels eines lufttechnischen Registers (20) nach einem der Ansprüche 1 bis 6, das an der Innenfläche (14) der Kanalisationswand (12) befestigt ist, wobei das Verfahren aus dem Übergehenlassen der aufblasbaren Blende (42) des lufttechnischen Registers (20) aus dem belüfteten Zustand mit dem zweiten Druck in den belüfteten Zustand mit dem ersten Druck und dann in den entlüfteten Zustand besteht.

## Claims

1. An aeraulic register (20), comprising an internal passageway (22) extending along an axis (24), the aeraulic register (20) further comprising:
- a filter (25) which extends all around the internal passageway (22), the filter having a radially inner surface (28) which externally delimits the internal passageway (22), and a radially outer surface (30) to be attached to an inner surface (14) of a pipe wall (12), and the filter (25) comprising a filtering medium (26) which is radially elastically deformable relative to the axis (24) and which is arranged between the radially inner surface (28) and the radially outer surface (30); and
- an inflatable stopper (42) arranged on the radially inner surface (28) of the filter (25) and capable of assuming a deflated state, corresponding to a pass state of the aeraulic register (20), wherein a free circulation of gas is possible through the inner passageway (22), an inflated state at a first pressure, corresponding to a filtering state of the aeraulic register (20), wherein the inflatable stopper (42) obstructs the inner passageway (22) and wherein a circulation of gas is possible through the filter (25), and an inflated state at a second pressure greater than the first pressure, corresponding to a non-pass state of the aeraulic register (20), wherein the inflatable stopper (42) obstructs the inner passageway (22) and radially compresses the filter (25) to the extent of preventing any passage of gas through the filter (25).

2. The aeraulic register according to claim 1, wherein the filtering medium (26) is formed by a double-wall 3D textile.

3. The aeraulic register according to claim 1 or 2, wherein the filter (25) has a geometry of revolution about the axis (24).

4. The aeraulic register according to any of claims 1 to 3, wherein the filter (25) has a flow sectional area which varies along the axis (24).

5. The aeraulic register according to any of claims 1 to 4, wherein the filter (25) further includes at least one sealing layer (18), which is made of a material which is non-permeable to gases and radially elastically deformable relative to the axis (24), and which extends to a radial end of the filtering medium (26) so as to define at least one of the radially inner surface (28) and the radially outer surface (30).

6. The aeraulic register according to any of claims 1 to 5, wherein the filter (25) further includes two electrodes (43A, 43B) configured to generate an electric field being radial, or having a radial component, within the filtering medium (26).

7. An aeraulic pipe section (10), comprising a pipe wall (12) having an internal surface (14) which delimits a gas circulation space (16), and an aeraulic register (20) according to any of claims 1 to 6 attached to the internal surface (14) of the pipe wall.

8. The aeraulic pipe section according to claim 7, wherein said aeraulic register is a first aeraulic register (20A), said aeraulic pipe section further comprising a second aeraulic register (20B) according to any of claims 1 to 6 attached to the internal surface (14) of the pipe wall (12) and axially adjacent to said first aeraulic register (20A), the filter (25B) of the second aeraulic register (20B) having a greater filtering power than the filter (25A) of the first aeraulic register (20A) and a lower radial compressibility than the filter (25A) of the first aeraulic register (20A), so that the first and second aeraulic registers (20A, 20B) define:
- a pass state of the aeraulic pipe section (10) when the first and second aeraulic registers (20A, 20B) each are in the pass state,
- a filtering state of the aeraulic pipe section (10) when the first and second aeraulic registers (20A, 20B) each are in the filtering state, and
- a non-pass state of the aeraulic pipe section (10) when the first aeraulic register (20A) is in the non-pass state and the second aeraulic register (20B) is in the filtering or non-pass state.

9. A gas treatment system (200), capable of alternately operating in a treatment mode and a regeneration mode, comprising:
- a primary channel (202) having an inlet (204) and an outlet (206);
- a secondary channel (208) separate from the primary channel (202) and having two opposite ends (210, 212) connected to the primary channel (202) so that the secondary channel (208) and a median portion (214) of the primary channel (202), arranged between the inlet (204) and the outlet (206), form a closed loop (216) in the regeneration mode;
- a capturing device (220) disposed in the median portion (214) of the primary channel, and adapted to capture some substances possibly present in a gaseous flow circulating in the primary channel, in the treatment mode;
- a regeneration device (230) disposed in a closed loop (216) and adapted to release the capturing device (220) from substances it has previously captured, in the regeneration mode; and
- a switching device configured to keep the inlet (204) and outlet (206) open, isolate the secondary channel (208) from the primary channel (202), and keep the regeneration device (203) stopped, in the treatment mode, and to keep the inlet (204) and outlet (206) closed, communicate the secondary channel (208) with the median portion (214) of the primary channel (202), and keep the regeneration device (230) in operation, in the regeneration mode;
**characterised in that** the switching device comprises at least two aeraulic pipe sections (10A, 10B) according to any of claims 7 to 8, respectively forming the inlet (204) and outlet (206) of the primary channel (202).

10. A method for opening an aeraulic pipe section (10) comprising a pipe wall (12) having an internal surface (14) which delimits a gas circulation space (16), by means of an aeraulic register (20) according to any of claims 1 to 6 attached to the internal surface (14) of the pipe wall (12), the method consisting in transitioning the inflatable stopper (42) of the aeraulic register (20) from the inflated state at the second pressure to the inflated state at the first pressure and then to the deflated state.
